# EUROPÄISCHE PATENTSCHRIFT

(11) **EP 2 605 230 B1**
(45) Veröffentlichungstag und Bekanntmachung des Hinweises auf die Patenterteilung: **19.02.2020**
(21) Anmeldenummer: 12196278.1
(22) Anmeldetag: 10.12.2012
(51) Int. Cl.: G08C 19/00, G07C 5/08, G01M 17/00

(54) **Diagnosetool zum Anschluss an eine Fahrzeug-Diagnosebuchse**
Diagnosis tool for connection to a vehicle diagnosis port
Outil diagnostique pour la connexion sur une douille de diagnostic d'un véhicule automobile

(30) Priorität: 12.12.2011 AT 18192011
(43) Veröffentlichungstag der Anmeldung: 19.06.2013
(73) Patentinhaber: AVL DiTest GmbH, 8020 Graz (AT)
(72) Erfinder: Weißmann, Hans-Reinhard, 90579 Langenzenn (DE)
(74) Vertreter: Patentanwälte Pinter & Weiss OG

(56) Entgegenhaltungen:
- WO-A2-2009/143204
- US-B1- 6 526 340

## Beschreibung

Die gegenständliche Erfindung betrifft ein Diagnosetool mit einem Diagnosestecker zum Anschluss an eine Fahrzeug-Diagnosebuchse, wobei das Diagnosetool eine Kommunikationsschnittstelle realisiert, wobei im Diagnosetool zumindest ein Universaltransceiver vorgesehen ist, der über eine Signalleitung mit einem Pin des Diagnosesteckers verbunden ist, wobei der Universaltransceiver einen konfigurierbaren Treiberblock zum Einstellen des elektrischen High-Pegels und/oder Low-Pegels der Signalleitung und einen konfigurierbaren Lastblock zum Einstellen eines elektrischen Widerstandes zwischen der Signalleitung und einer Referenzspannung und/oder zwischen der Signalleitung und Masse aufweist.

Für die Diagnose und Kontrolle, z.B. zur Abfrage von Störungsmeldungen oder von Messwerten, wie z.B. abgasrelevante Messwerte, etc., gibt es in jedem neueren Fahrzeug eine international genormte Diagnosebuchse, die sogenannte OBD-Buchse. Diese besitzt sechszehn Kontakte wobei lediglich drei davon in ihrer Belegung festgelegt sind, nämlich Pin 16 Versorgungsspannung, Pin 5 Signal-Masse und Pin 4 Fahrzeug-Masse. Die restlichen dreizehn Kontakte der OBD-Buchse können herstellerspezifisch für Diagnosezwecke beliebig belegt sein. Die Pins der Fahrzeug-Diagnosebuchse können mittels eines Diagnosesteckers, der mit einem Diagnosetool zur Auswertung der elektrischen Signale verbunden ist, kontaktiert werden.

Jeder herstellerspezifische Signalanschluss kann dabei viele verschiedenartige elektrische Eigenschaften haben. Daneben sind bei gleichen elektrischen Eigenschaften noch unterschiedliche logische, softwaretechnische Funktionen möglich. So kann z.B. ein Signalpin als ISO9141-K-Line elektronisch aufgebaut sein, der darüber ablaufende Datenaustausch kann jedoch mittels verschiedener serieller Kommunikationsprotokolle z.B. KW2000, KWFB, usw. erfolgen. Für den physikalischen Aufbau eines Diagnosetools ist zuerst einmal die elektronische Ebene entscheidend, denn ohne eine richtige Anpassung der elektrischen Signale zwischen Fahrzeug und Diagnosetool kann keine Datenkommunikation und damit keine Diagnose stattfinden. Die elektrischen Signale einer Leitung sind möglicherweise sehr unterschiedlich, sie können sowohl für sich allein (single ended) wie auch im Vergleich mit einem weiteren elektrischen Signal (differentiell) eine bestimmte Bedeutung haben. Die mögliche differentielle Signalübertragung stellt hierbei eine weitere Komplexität in der Belegung der Pins der OBD-Buchse dar, da jeder Signalanschluss (Pin) in Verbindung zu einem beliebigen anderen Signalanschluss (Pin) benutzt werden kann. Für das Diagnosetool wären damit nachvollziehbar sehr viele Anschlusskonfigurationen vorzuhalten, um alle bisherigen herstellerspezifischen Pinbelegungen abdecken zu können. Für die Gesamtzahl der möglichen Belegungen der Kontakte der OBD-Buchse spielt die Zahl der verschiedenartigen elektronischen Signale eine sehr entscheidende Rolle, denn mit jedem neu genormten elektrischen Kommunikationssignal ergibt sich eine Vielzahl neuer Pinbelegungsmöglichkeiten.

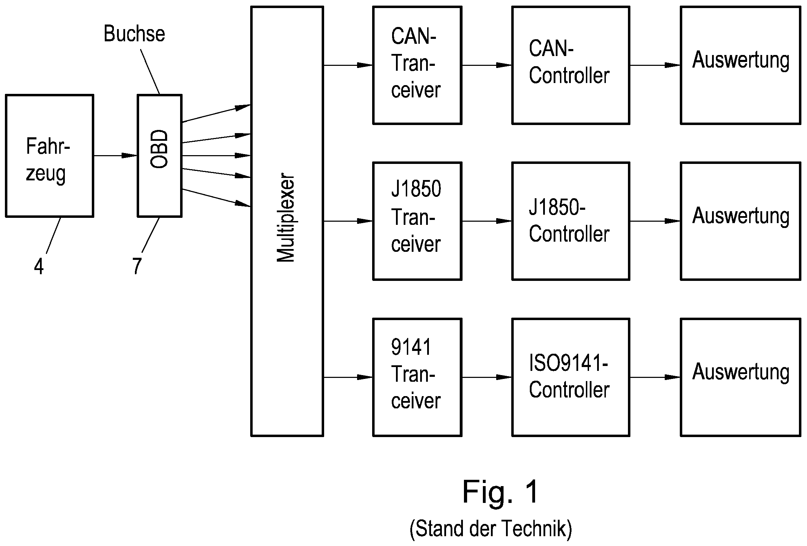

Für jede vorhandene physikalische Schnittstelle (z.B. ISO9141 K-Line, CAN, J1850 Bus +, etc.) muss im Diagnosetool mindestens ein entsprechender Sender-Empfänger (Transceiver) vorhanden sein, der noch dazu an den richtigen OBD-Pin angeschlossen sein muss. Da viele verschiedene Anschlussmöglichkeiten vorhanden sind, und die Schnittstellen auch nicht immer miteinander verträglich sind (falsch angeschlossene Signale können zur Zerstörung von Schnittstellen-Transceivern führen), müssen die Signalwege für die Schnittstellen schaltbar sein. Damit die OBD-Signale auf verschiedene Transceiver verschaltet werden können und sich verschiedene physikalische Schnittstellen gegenseitig nicht stören, benötigt ein Diagnosetool einen analogen Multiplexer im Eingang, der die Signalwege zwischen den OBD-Pins und dem Diagnosetool flexibel umschalten kann, wie in Fig.1 schematisch darge-stellt. Ein solcher Eingangsmultiplexer sollte möglichst störungssicher mit kleinen Verlustwiderständen und parasitären Kapazitäten arbeiten, damit die Schnittstellen auch bei höheren Frequenzen und größeren Signalströmen gut funktionieren. Das Problem dabei ist, dass für einen Multiplexer viele einzelne Schalter benötigt werden, wovon im Betrieb ein Teil geöffnet und ein Teil geschlossen ist. Daraus resultiert ein Serienwiderstand als Summe von Schalterwiderständen und eine Parallelkapazität aus den Kapazitäten von geschlossenen und offenen Schaltern. Für eine praktische Auslegung des Eingangsmultiplexers sollte der Serienwiderstand und die Parallelkapazität möglichst klein sein. Leider sind die beiden Parameter normalerweise umgekehrt proportional, d.h. niedrige Serienwiderstände haben hohe Parallelkapazitäten zur Folge und umgekehrt. Für die Schaltungsdimensionierung muss deshalb ein Kompromiss gefunden werden und eine mittlere Auslegung gewählt werden, die für alle Anwendungsfälle nutzbar und zudem noch bezahlbar ist. Damit können die Serienwiderstände nicht zu klein werden, um gleichzeitig die Kapazitäten nicht zu groß werden zu lassen. Für jedes in das Diagnosetool zusätzliche zu integrierende Interface werden zusätzliche Schalter benötigt, die den Eingangsmultiplexer passiv zusätzlich mit Parallelkapazitäten belasten und damit das Frequenzverhalten für höhere Datenraten negativ beeinflussen.

Die WO 2009/143204 A2 offenbart ein Diagnosetool zum Anschluss an eine Fahrzeug-Diagnosebuchse, umfassend einen Universaltransceiver, welcher eine Signalstufe enthält. Die US 6,526,340 B1 offenbart ein Diagnosetool, das einen FPGA als programmierbare I/O-Einheit aufweist. Der FPGA ist mit mehreren parallel Schnittstellen-Controllern ausgestattet. Eine Umschaltung verschiedener physikalischer Schnittstellen erfolgt im analogen Bereich über Relais.

Für ein flexibel einsetzbares Diagnosetool stellt sich somit einerseits das Problem, alle möglichen Belegungen der OBD-Buchse bedienen zu können und andererseits die Eingangsstufe des Diagnosetools elektrisch praktikabel auszulegen. Die gegenständliche Erfindung stellt sich somit die Aufgabe, eine Lösung dafür anzugeben.

Diese Aufgabe wird erfindungsgemäß dadurch gelöst, indem im Diagnosetool ein digitaler Multiplexer vorgesehen ist, der mit dem Universaltransceiver und mit einem Datenkommunikations-Steuerblock verbunden ist und der gemäß der Kommunikationsschnittstelle die benötigte Verbindung zwischen dem digitalen Aus- und Eingang des Universaltransceivers und den Aus- bzw. Eingängen des Datenkommunikations-Steuerblocks herstellt. Ein solcher Universaltransceiver ist in der Lage an die unterschiedlichen Spezifikationen der unterschiedlichen Kommunikationsschnittstellen flexibel und einfach angepasst zu werden. Damit müssen die Signale nicht mittels eines Multiplexers zuerst an die richtigen Transceiverbausteine verteilt werden, sondern die Signale können direkt am konfigurierbaren Signalpin verarbeitet werden. Damit erzielt man eine definierte Eingangsstufe des Diagnosetools, die in der Lage ist, einfach an verschiedene Schnittstellen angepasst zu werden.

Durch das erfindungsgemäße Diagnosetool, insbesondere wenn mehrere, bevorzugt alle, Pins des Diagnosesteckers über einen Universaltransceiver angeschlossen sind, kann die Rangierbarkeit der physikalischen Schnittstellen an der OBD-Buchse im Fahrzeug, welche bisher durch analoge Umschaltung verschiedener Schnittstellen-Transceiver erzielt wurde und damit bei vertretbarem Aufwand sehr eingeschränkt war, durch eine maximale Rangierbarkeit im digitalen Bereich ersetzt werden. Diese erfindungsgemäßen Eigenschaften des Universaltransceivers macht die ganze bisherige Problematik von verschiedenen Adaptionen am Fahrzeug überflüssig. Damit erzielt man eine ganz neue Art von Diagnosetool ohne die bisherigen Einschränkungen bei den sehr unterschiedlichen OBD-Buchsenbelegungen.

Vorzugsweise ist im Diagnosetool auch ein konfigurierbarer Filterblock vorgesehen, um Signalanteile eines bestimmten Frequenzbereiches aus dem Nutzsignal herauszufiltern und/oder um die Signalleitung dynamisch abzuschließen, was die Einsetzbarkeit des Diagnosetools weiter erhöht.

Ebenso ist es vorteilhaft im Diagnosetool einen konfigurierbaren Triggerblock vorzusehen, um den elektrischen High-Pegel und/oder Low-Pegel an der Signalleitung zu erkennen. Dadurch kann ein Eingangssignal einfach in ein digitales Signal umgewandelt werden, wobei die unterschiedlichen elektrischen Pegel der unterschiedlichen Kommunikationsschnittstellen einfach eingestellt werden können.

Sehr einfach können die Funktionsblöcke, also Treiberblock und/oder Lastblock und/oder Filterblock und/oder Triggerblock, im Universaltransceiver über eine programmierbare I/O-Einheit konfiguriert werden. Auf diese Weise ist die Konfiguration über eine einzige Einheit möglich, die vom Diagnosetool einfach mit entsprechenden Steuersignalen angesteuert werden. Darüber hinaus kann die I/O-Einheit durch eine Neue- oder Umprogrammierung auch einfach angepasst werden, z.B. an geänderte oder neue Kommunikationsschnittstellenspezifikationen.

Die Eigenschutzfunktionalität des Diagnosetools wird erhöht, wenn in der I/O-Einheit und/oder im Treiberblock und/oder im Lastblock und/oder im Filterblock und/oder im Triggerblock eine Schutz- und Überwachungsfunktion zum Schutz der Signalleitung gegen mögliche Fehlerzustände realisiert ist. Damit können auch Beschädigungen des Diagnosetool oder bestimmter Funktionsblöcke oder gar eine Zerstörung des Diagnosetools verhindert werden.

Die richtigen Verbindungswege werden einfach durch einen digitalen Multiplexer eingestellt, der mit dem Universaltransceiver und mit einem Datenkommunikations-Steuerblock verbunden ist und der gemäß der Kommunikationsschnittstelle die richtige Verbindung zwischen dem digitalen Aus- und Eingang des Universaltransceivers und den Aus- bzw. Eingängen des Datenkommunikations-Steuerblocks herstellt. Da der digitale Multiplexer mit rein digitalen Signalen arbeitet, müssen keine elektrischen Schaltkreise mit den oben angeführten Nachteilen aufgebaut werden. Die richtigen bzw. benötigten Verbindungswege können einfach in den digitalen Multiplexer programmiert werden, was das Diagnosetool sehr flexible macht. Da es praktisch keine Einschränkungen bezüglich der Menge der schaltbaren Verbindungen zwischen allen Universaltransceiver und mehreren Datenkommunikations-Steuerblocks gibt, können auch viele Kommunikationskanäle gleichzeitig (parallel) benutzt werden. D.h. es können z.B. in einem Fahrzeug ein oder mehrere K-Lines und CAN auf der OBD-Buchse vorhanden sein, wobei alle vorhandenen Fahrzeugschnittstellen gleichzeitig bedient werden können, wenn jeweils auch die entsprechende Anzahl an Datenkommunikations-Steuerblöcken vorhanden sind (z.B. UARTS für K-Line, CAN-Controller). Damit kann die benötigte Zeit für die Fahrzeug-Diagnose deutlich verkürzt werden, weil der Datentransfer parallel auf mehreren Kanälen erfolgen kann. Vor allem bei der Programmierung der Steuergeräte im Fahrzeug über die OBD-Schnittstelle gibt diese Parallelität einen deutlichen Zeitvorteil (bzw. Kostenvorteil) da die Fahrzeuge schnellere Steuergeräte-Updates erhalten und somit geringere Standzeiten in der Werkstatt haben. Besonders für die Fertigung beim Fahrzeughersteller ist diese Parallelität von großem Vorteil, da die endgültige Software des Fahrzeugs am Fertigungsbandende bei vielen Steuergeräten parallel programmiert werden kann und damit viel Zeit (Kosten) gespart werden kann.

Es gibt auch bestimmte Fahrzeuge, welche die gleichzeitige periodische Bedienung z.B. einer K-Line brauchen, damit z.B. eine CAN-Schnittstelle aktiv geschaltet/gehalten werden kann (gleichzeitig K-Line und CAN-Schnittstelle bedienen). Diese Schnittstellen können mit den konventionellen Diagnose-Tools (mit nur einen aktiven Schnittstelle) nicht bedient werden, sehr wohl aber mit einem erfindungsgemäßen Diagnosetool.

Alle Universaltransceiver lassen sich durch herkömmliche elektrische Maßnahmen auch in einen komplett inaktiven Tristate-Modus bringen und können somit auch parallel (Pin für Pin parallel) zu einem vorhandenem konventionellem Diagnosetool geschaltet werden, ohne die Funktion des anderen konventionellen Diagnosetools zu beeinträchtigen, jedoch mit der Möglichkeit, die Kommunikation zwischen Fahrzeug und diesem Diagnosetool zu beobachten und zu überwachen. Mit diesem System könnten Fehler z.B. beim Update der Steuergeräte schneller erkannt und behoben werden. Es könnten auch zwei oder mehrere Diagnose-tools mit Universaltransceiver parallel geschaltet und somit ein redundantes System einge-richtet werden, das den Ausfall einer Komponente feststellt und auch deren aktive Funktion bei Bedarf übernehmen könnte. Dies stellt eine deutliche Erhöhung der Funktionssicherheit beim Update der Steuergeräte im Fahrzeug (z.B. auch am Fertigungsbandende in der Fertigung) dar.

Die Tristatefähigkeit eines Universaltransceivers ist auch eine gute Voraussetzung, dass z.B. zukünftige spezielle Schnittstellen wie DolP (Diagnose over IP/Ethernet) wahlweise an bereits genutzten OBD-Pins alternativ benutzt werden können. Sind z.B. die normalen Schnittstellen in Betrieb, so arbeiteten die Universaltransceiver normal, wenn jedoch DolP aktiviert wird, dann kann der Universaltransceiver komplett abgeschaltet werden und DolP wird über spezielle Schalter direkt an die OBD-Pins angelegt.

Universaltransceiver lassen sich auch so parametrieren, dass sie zur Ausgabe bzw. für die Steuerung externer Multiplexer, z.B. mit I2C-Schnittstelle, Steuersignale ausgeben können, z.B. Multiplexer für nicht OBD-Buchsen in älteren Fahrzeugen. Somit kann auch die weitere Verwendung von vorhandenen externen Multiplexern prinzipiell gewährleistet werden.

Universaltransceiver sind auch als Universaleingänge benutzbar (z.B. mit Treiber/Last im Tristate-Modus), d.h. es können sehr unterschiedliche analoge oder digitale Impulsformen in digitale Signale umgewandelt werden. Deren Frequenz, Tastverhältnis, etc. kann dann einfach per Hardware oder Software im Diagnosetool ausgewertet werden. Dies ist sehr sinnvoll, da manche ältere Fahrzeuge an bestimmten Pins der OBD-Buchse z.B. drehzahlabhängige Impulssignale oder andere Analogsignale, wie z.B. Zündung-Ein/Aus-Signal, etc., angelegt haben. All diese Informationen können entweder mit Hilfe der Triggerstufe oder eines A/D-Wandlers für die Diagnose-Software zur Verfügung gestellt und damit auch ausgewertet werden.

Die gegenständliche Erfindung wird nachfolgend unter Bezugnahme auf die Figuren 1 bis 4, die schematisch, beispielhaft und nicht einschränkend vorteilhafte Ausgestaltungen der Erfindung zeigen, beschrieben. Dabei zeigt
- Fig.1: ein Diagnosetool nach dem Stand der Technik,
- Fig.2: ein erfindungsgemäßes Diagnosetool und
- Fig.3: ein Blockschaltbild eines Universaltransceivers.

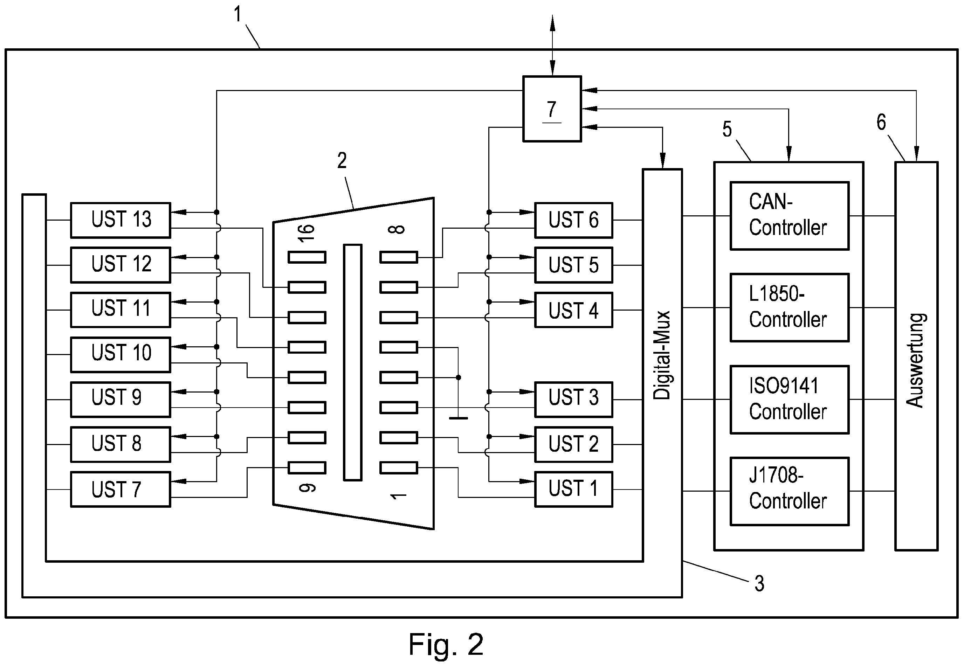

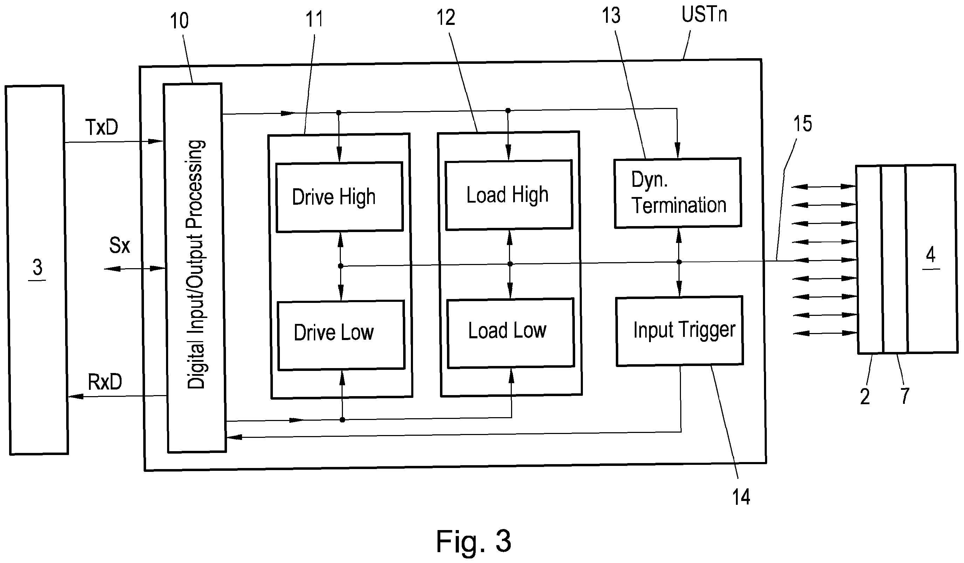

Ein Diagnosetool 1 ist über eine Fahrzeug-Diagnosebuchse 8 mit einem Fahrzeug 4 verbunden, wie schematisch in Fig. 3 dargestellt. Die Verbindung erfolgt dabei am einfachsten über einen Diagnosestecker 2, der z.B. mittels eines geeigneten Kabels mit dem Diagnosetool 1 verbunden ist. Im gezeigten Ausführungsbeispiel sind alle dreizehn herstellerspezifischen Pins des Diagnosesteckers 2 jeweils mit einem Universaltransceiver UST1 ... UST13 verbunden (Fig.2). Selbstverständlich kann auch vorgesehen sein, nur bestimmte Pins mit einem Universaltransceiver UST1 ... UST13 zu verbinden, wobei für ein auf einer einzelnen Signalleitung aufbauenden Kommunikationsprotokoll (single ended) zumindest ein Pin mit einem Universaltransceiver UST1 ... UST13 verbunden ist und für ein differentielles Kommunikationsprotokoll zumindest zwei Pins je mit einem Universaltransceiver UST1 ... UST13 verbunden sind.

Im gezeigten Ausführungsbeispiel sind die Universaltransceiver UST1 ... UST13 im Diagnosetool 1 mit einem digitalen Multiplexer 3 verbunden. Der digitale Multiplexer 3 kann z.B. als programmierbarer Baustein oder als Mikroprozessor ausgeführt sein und stellt die Verbindung zwischen den Pins des Diagnosesteckers 2 und den Ein- und Ausgängen eines Datenkommunikations-Steuerblock 5 her. Im Datenkommunikations-Steuerblock 5 kann für jedes zu realisierendes Datenkommunikationsprotokoll, z.B. CAN, J1850, ISO9141, J1708, etc., eine Steuereinheit vorgesehen sein, z.B. in Form eines kommerziell erhältlichen elektronischen Steuerbausteins, z.B. ein CAN-Controller, ein J1850-Controller, etc. In dieser hardwaremäßigen Umsetzung verbindet der digitale Multiplexer 3 die richtigen Pins des Diagnosesteckers 2 mit den richtigen Ein- und Ausgängen der richtigen Steuereinheit. Einzelne Steuereinheiten könnten aber auch in Software umgesetzt sein. Ebenso könnte eine fixe Verdrahtung zwischen einzelnen Pins des Diagnosesteckers 2 und dem Datenkommunikations-Steuerblock 5 bzw. Steuereinheiten darin vorgesehen sein, wobei kein digitaler Multiplexer erforderlich wäre, was aber natürlich die Flexibilität reduzieren würde. Selbstverständlich ist auch eine Kombination der oben angeführten Möglichkeiten vorstellbar, also z.B. einige Pins über digitalem Multiplexer 3 mit einem Datenkommunikations-Steuerblock 5 oder einzelnen Steuereinheiten verbunden und andere Pins fest verdrahtet mit einem Datenkommunikations-Steuerblock 5 oder einzelnen Steuereinheiten.

Im Diagnosetool 1 kann auch eine Auswerteeinheit 6 vorgesehen sein, in der die Signale aufbereitet und ausgegeben werden können.

In Fig.3 ist nun ein einzelner Universaltransceiver USTn dargestellt, der an einem Pin des Diagnosesteckers 2 angeschlossen ist. Ziel des Universaltransceivers USTn ist es, für den Signalpin und das gewählte Kommunikationsprotokoll eine physikalisch passende elektrische Schnittstelle zu realisieren. Aus diesem Grund müssen verschiedene elektrische Eigenschaften konfigurierbar sein, wofür im Universaltransceiver USTn die folgenden Funktionsblöcke angeordnet sein können.

In einem Treiberblock 11 wird der elektrische High-Pegel und/oder Low-Pegel für die Signalleitung 15 eingestellt. Im Treiberblock 11 werden die für die unterschiedlichen Kommunikationsschnittstellen erforderlichen unterschiedlich großen High-Pegel und/oder Low-Pegel der verschiedenen Schnittstellen erzeugt und nur der jeweils passende High-Pegel und/oder Low-Pegel der zu realisierenden Schnittstelle auf dem Signalpin des Diagnosesteckers 2 aktiv getrieben. Es gibt dazu die Möglichkeit entweder nur einen Pegel (High oder Low) aktiv zu treiben, wobei der korrespondierende Pegel (Low oder High) dann passiv über einen Abschlusswiderstand, oder über eine zugeschaltete Last erzeugt werden kann. Daneben gibt es noch die Möglichkeit, beide Pegel (High und Low) auch aktiv zu treiben. Beim Treiberblock 11 kann es sich z.B. um Transistorschaltstufen handeln, die den jeweiligen Ausgangspegel mit möglichst geringem Innenwiderstand an den Pin anlegen können. Dabei kann der Ausgangsstrom auch kontinuierlich überwacht und evtl. abgeschaltet werden, falls ein Überstrom auftritt.

In einem Lastblock 12 wird der elektrische Widerstandes zwischen der Signalleitung 15 und einer Referenzspannung und/oder zwischen der Signalleitung 15 und Masse eingestellt. Unterschiedliche Schnittstellen erfordern unterschiedliche elektrische Widerstandsbeschaltungen zwischen der Signalleitung und einer Referenzspannung bzw. zwischen der Signalleitung 15 und Masse. Die Referenzspannung kann z.B. der logische High-Pegel der Signalleitung 15 oder aber auch die Fahrzeugspannung sein. Die erforderlichen Widerstände sind gemäß der Schnittstellenspezifikation der Kommunikationsschnittstelle zuzuschalten, um deren korrekte Funktion zu gewährleisten. Zur Beschaltung eines OBD-Pins mit einer bestimmten Last können z.B. mittels Transistorschaltstufen sowohl einfache Lastwiderstände nach Masse (Load Low) oder zur verwendeten Bezugsspannung (Load High), z.B. 5V, geschaltet werden. Daneben gibt es noch die Möglichkeit, Lastwiderstände mit einer schaltbaren und parametrierbaren Konstantstromquelle zu simulieren. Dabei wird der Strom so ausgegeben, wie es dem gewünschten Lastwiderstand entspricht.

Des Weiteren erfordern manche Schnittstellen auch die Möglichkeit, die Signalanteile eines bestimmten Frequenzbereiches, z.B. der hochfrequenten Signalanteile, aus den Nutzsignalen herauszufiltern. Dies erfolgt in einem an die Signalleitung 15 zuschaltbaren Filterblock 13. Der Filterblock 13 kann auch zum dynamischen Abschluss der Signalleitung 15 dienen, z.B. CAN-High-Speed-Schnittstellen erfordern auf den beiden differentiellen Leitungen einen Snubber (Dämpfung) als Abschluss um Signal-Reflexionen auf den Busleitungen zu vermeiden. Hier kann ein dynamischer Leitungsabschluss angelegt oder einfache Filterfunktionen aktiviert werden, z.B. indem RC-Glieder oder LC-Glieder durch Analogschalter in den Signalpfad geschaltet werden.

Ebenso kann ein Triggerblock 14 vorgesehen sein, um den elektrischen High-Pegel und/oder Low-Pegel an der Signalleitung 15 bzw. am Signalpin des Diagnosesteckers 2 zu erkennen. Im Triggerblock 14 wird der Signalpin als Eingang betrachtet und es müssen gemäß den Vorgaben der Kommunikationsschnittstelle High- und Low-Pegel mit sehr unterschiedlichen Spannungspegeln sicher erkannt werden. Der Triggerblock 14 erlaubt die Umsetzung der physikalischen Signale auf dem OBD-Pin gemäß der für die Schnittstelle (z.B. CAN-High-Speed, CAN-Low-Speed, K-Line, etc.) geltenden und spezifizierten sicher zu erkennenden Signalpegeln. Dabei werden dann aus den Pegeln des OBD-Pins digitale Signale abgeleitet, die leicht weiter verarbeitet werden können, z.B. in einer unten beschriebenen digitalen I/O-Einheit 10. Mit diesen Digitalsignalen können alle weiter nötigen Bearbeitungen in der normalen digitalen Hardware (z.B. FPGA, Mikrocontroller, etc.) des Diagnosetools 1 erfolgen, wie z.B. Glitcherkennung, Kollisionserkennung, digitale Filterung und auch die Verknüpfung mehrerer Eingangssignale bei differentiellen Protokollen. Hierbei kann es sich z.B. um einstellbare Komparatoren handeln, deren Hysterese und Triggerpunkt über D/A-Wandler einstellbar sind. Das Ausgangssignal des Komparators kann dann als digitales Signal weiterverarbeitet werden.

In jedem der oder einzelnen der oben beschriebenen Funktionsblöcke können auch Schutz-und Überwachungsfunktionen zum Schutz der Signalleitung 15 gegen mögliche Fehlerzustände (z.B. Kurzschlüsse, Überspannung, Überstrom, etc), wie zum Teil bereits oben erläutert, realisiert sein. Im Treiberblock 11 erfolgt z.B. eine Überwachung des Ausgangsstroms. Im Lastblock 12 kann der Ausgangsstrom und die Ausgangsspannung bzw. Lastspannung überprüft und notfalls kann auch die Last abgeschaltet werden. Die Überprüfung der eigentlichen Signalpegel auf der Signalleitung 15 kann dabei z.B. mittels A/D-Wandler, der Fehlerzustände ermittelt, erfolgen. Mit diesen Maßnahmen kann die Eigenschutzfunktionalität des Universaltransceivers USTn und damit die Robustheit des Diagnosetools 1 erheblich verbessert werden.

Die Steuerung und Konfiguration der Funktionsblöcke im Universaltransceiver USTn erfolgt über eine I/O-Einheit 10, die wiederum vom Diagnosetool 1 gesteuert wird, z.B. von einer allgemeinen Steuereinheit 7 des Diagnosetools 1 per Software. Die digitale I/O-Einheit 10 ist dabei in Richtung zum digitalen Multiplexer 3 bzw. zum Datenkommunikations-Steuerblock 5 angeordnet. Es gibt also neben den normalen RxD/TxD-Signalen zum Datenkommunikations-Steuerblock 5 zusätzliche Steuersignale Sx welche die Parametrierung (Art der Schnittstelle, Konfiguration der Funktionsblöcke, etc.) des Universaltransceivers USTn über die I/O-Einheit 10 vornehmen. Diese Parametrierung wird vom Benutzer über Software gesteuert und erlaubt dann die Einstellung der jeweils vorhandenen Universaltransceiver USTn und gegebenenfalls auch die Verknüpfung der von den Universaltransceiver USTn gelieferten Triggersignale, z.B. für ein differentielles Kommunikationsprotokoll. Die I/O-Einheit 10 kann somit teilweise bereits die Funktion des digitalen Multiplexers 3 erfüllen.

Die digitale I/O-Einheit 10 übersetzt beim Ausgang TxD die vom Diagnosetool 1 kommenden und an das Fahrzeug gesendeten digitalen Signale (z.B. CAN_TX, UART-TxD) in physikalisch und elektrisch richtige Signale auf der Signalleitung 15, indem die Funktionsblöcke im Universaltransceiver USTn gemäß der konkreten Kommunikationsschnittstelle konfiguriert werden. Dazu nutzt die I/O-Einheit 10 die über das Steuersignal Sx von der Steuereinheit 7 des Diagnosetools 1 erhaltenen Information über die Art der Schnittstelle (z.B. CAN, K-Line, J1850, etc.) und der damit verbundenen benötigten physikalischen Eigenschaften der Signalleitung 15 (z.B. als CAN_High-Speed High-Signal oder K-Line, etc.). Z.B. wird für einen Universaltransceiver USTn mit der Funktion eines CAN-Low-Speed-Treibers, der die CAN-High-Leitung als Signalleitung 15 bedient, im Treiberblock 11 ein aktiver Treiber nach +5V (Drive High) und gleichzeitig im Lastblock 12 eine Last nach Masse (Load-Low) benötigt und eventuell im Filterblock 13 auch die dynamische Termination eingeschaltet, um Reflexionen auf der Signalleitung 15 zu vermeiden. Die digitale I/O-Einheit 10 kann dazu z.B. als Mikroprozessor oder programmierbarer Baustein (FPGA) mit entsprechender Programmierung zur Umsetzung der Ansteuerung der Funktionsblöcke zur Realisierung der benötigten Konfiguration ausgeführt sein.

Zusätzlich dazu kann es noch in der I/O-Einheit 10 integrierte Schutzmaßnahmen geben, um die Ausgänge des Universaltransceivers USTn (in Richtung zum Pin des Diagnosesteckers 2) zu schützen. Ein Ausgang des Universaltransceivers USTn kann z.B. eine Stromüberwachung und eine automatische Abschaltung vorsehen, wenn der Ausgangsstrom zu groß wird (z.B. durch Kurzschluss der OBD-Leitung nach Masse bzw. Fahrzeugspannung). Ein Ausgang kann weiters mit herkömmlichen elektrischen Maßnahmen so konstruiert sein, dass dieser im Bedarfsfall in den Tristate-Zustand (also einen hochohmigen Zustand) übergeht und damit das Fahrzeugsignal nur sehr wenig belastet. Ein Universaltransceiver USTn kann dadurch deutlich höhere Spannungen an der Fahrzeug-Diagnosebuchse verkraften, als sie normalerweise im Betrieb auftreten können und wird damit relativ betriebssicher.

Die digitale I/O-Einheit 10 konfiguriert gemäß den Vorgaben der jeweiligen Kommunikationsschnittstelle (wieder gesteuert durch Steuersignale Sx) beim Eingang RxD der meist bidirektionalen Pins die Funktionalität des Triggerblocks 14 (z.B. Triggerpunkt, Hysterese, Eingangsfilter, etc.). Bei differentiellen Schnittstellen kann die I/O-Einheit 10 auch die Verknüpfung des Eingangssignals mit getriggerten Eingangssignalen anderer Universaltransceiver USTn übernehmen. Ein single ended Signal (z.B. K-Line) wird dazu mit dem Triggerblock 14 in ein digitales Signal umgewandelt und kann als RxD-Signal weiterverarbeitet werden. Bei differentiellen Fahrzeugschnittstellen (z.B. CAN, J1850-PWM, etc.) können die Eingangssignale verschiedener OBD-Pins in ein gemeinsames Ausgangssignal umgesetzt werden. Für die bereits in digitale Signale gewandelten einzelnen Eingangssignale (z.B. CAN-High und CAN-Low) gibt es dann eine frei wählbare Verknüpfung, um das eigentliche Eingangssignal (z.B. CAN_RX) zu erzeugen.

Alle Universaltransceiver UST werden vorteilhaft von einer einzigen gemeinsamen I/O-Einheit, d.h. diese enthält alle I/O-Einheiten 10 der einzelnen Universaltransceiver USTn, angesteuert. Diese große I/O-Einheit, z.B. als FPGA, CPLD oder Mikrocontroller realisiert, kann sowohl die Funktionalität der Steuerung für jeden einzelnen Universaltransceiver USTn und auch die bedarfsweise Verknüpfung der Eingangssignale unterschiedlicher Universaltransceiver USTn (für differentielle Datenkommunikationsprotokolle) in sich vereinen. Z.B. werden alle I/O-Einheiten 10 der Universaltransceiver USTn in einem FPGA gleichzeitig mit dem digitalen Multiplexer 3 zwischen den Universaltransceiver USTs und den verschiedenen Datenkommunikations-Steuerblöcken 5 eingebaut.

Die digitale I/O-Einheit und der digitale Multiplexer können auch in einer gemeinsamen programmierbaren Einheit, die beide Funktionalitäten umfasst, zusammengefasst werden. Selbstverständlich ist es auch denkbar, dass auch noch der Datenkommunikations-Steuerblock 5 in einer gemeinsamen programmierbaren Einheit integriert sind. Als vollständigste Integration können sowohl die Steuereinheit 7, der Datenkommunikations-Steuerblock 5, der digitale Multiplexer 3 und die I/O-Einheiten 10 in einer programmierbaren Einheit, z.B. FPGA, CPLD oder Mikrocontroller, realisiert sein. Damit würde das gesamte Diagnosetool 1 aus einem geeigneten FPGA oder Mikroprozessor und den einzelnen Universaltransceiver USTn bestehen und könnte bei kleinsten Abmessungen maximal mögliche Diagnosemöglichkeiten bieten.

Anstelle der Steuereinheit des Diagnosetools 1 könnten die Steuersignale Sx zur Konfiguration der Funktionsblöcke des Universaltransceivers USTn auch von einer Steuereinheit im Datenkommunikations-Steuerblock 5, die ja einem Kommunikationsprotokoll zugeordnet ist, erzeugt werden.

Ebenso ist es denkbar, dass bei differentiellen Protokollen die richtige Verknüpfung der richtigen Signalleitungen in einer Steuereinheit im Datenkommunikations-Steuerblock 5 erfolgt, die dazu entsprechende Eingänge zur Verfügung stellen könnte.

## Patentansprüche

1. Diagnosetool mit einem Diagnosestecker (2) zum Anschluss an eine Fahrzeug-Diagnosebuchse (8), wobei das Diagnosetool (1) eine Kommunikationsschnittstelle realisiert, wobei im Diagnosetool (1) zumindest ein Universaltransceiver (USTn) vorgesehen ist, der über eine Signalleitung (15) mit einem Pin des Diagnosesteckers (2) verbunden ist, wobei der Universaltransceiver (USTn) einen konfigurierbaren Treiberblock (11) zum Einstellen des elektrischen High-Pegels und/oder Low-Pegels der Signalleitung (15) und einen konfigurierbaren Lastblock (12) zum Einstellen eines elektrischen Widerstandes zwischen der Signalleitung (15) und einer Referenzspannung und/oder zwischen der Signalleitung (15) und Masse aufweist, **dadurch gekennzeichnet, dass** im Diagnosetool (1) ein digitaler Multiplexer (3) vorgesehen ist, der mit dem Universaltransceiver (USTn) und mit einem Datenkommunikations-Steuerblock (5) verbunden ist und der gemäß der Kommunikationsschnittstelle die benötigte Verbindung zwischen dem digitalen Aus- und Eingang des Universaltransceivers (USTn) und den Aus- bzw. Eingängen des Datenkommunikations-Steuerblocks (5) herstellt.

2. Diagnosetool nach Anspruch 1, **dadurch gekennzeichnet, dass** im Diagnosetool (1) ein konfigurierbarer Filterblock (13) vorgesehen ist, um Signalanteile eines bestimmten Frequenzbereiches aus dem Nutzsignal herauszufiltern und/oder um die Signalleitung (13) dynamisch abzuschließen.

3. Diagnosetool nach Anspruch 1 oder 2, **dadurch gekennzeichnet, dass** im Diagnosetool (1) ein konfigurierbarer Triggerblock (14) vorgesehen ist, um den elektrischen High-Pegel und/oder Low-Pegel an der Signalleitung (15) zu erkennen.

4. Diagnosetool nach einem der Ansprüche 1 bis 3, **dadurch gekennzeichnet, dass** im Diagnosetool (1) eine programmierbare I/O-Einheit (10) vorgesehen ist, die den Treiberblock (11) und/oder den Lastblock (12) und/oder den Filterblock (13) und/oder den Triggerblock (41) gemäß den Vorgaben der Kommunikationsschnittstelle konfiguriert.

5. Diagnosetool nach einem der Ansprüche 1 bis 4, **dadurch gekennzeichnet, dass** in der I/O-Einheit (10) und/oder im Treiberblock (11) und/oder im Lastblock (12) und/oder im Filterblock (13) und/oder im Triggerblock (14) eine Schutz- und Überwachungsfunktion zum Schutz der Signalleitung (15) gegen mögliche Fehlerzustände realisiert ist.

## Claims

1. Diagnostic tool having a diagnostic plug (2) for connection to a vehicle diagnostic socket (8), the diagnostic tool (1) implementing a communication interface, at least one universal transceiver (USTn) being provided in the diagnostic tool (1), which universal transceiver (USTn) is connected to a pin of the diagnostic plug (2) via a signal line (15), the universal transceiver (USTn) comprising a configurable driver block (11) for setting the electrical high level and/or low level of the signal line (15) and a configurable load block (12) for setting an electrical resistance between the signal line (15) and a reference voltage and/or between the signal line (15) and ground, **characterized in that** a digital multiplexer (3) is provided in the diagnostic tool (1), which digital multiplexer (3) is connected to the universal transceiver (USTn) and to a data-communication control block (5) and which, according to the communication interface, establishes the required connection between the digital output and input of the universal transceiver (USTn) and the output and inputs of the data-communication control block (5).

2. Diagnostic tool according to claim 1, **characterized in that** a configurable filter block (13) is provided in the diagnostic tool (1) for filtering out signal components of a specific frequency range from the useful signal and/or for dynamically terminating the signal line (13).

3. Diagnostic tool according to either claim 1 or claim 2, **characterized in that** a configurable trigger block (14) is provided in the diagnostic tool (1) for detecting the electrical high level and/or low level at the signal line (15).

4. Diagnostic tool according to any of claims 1 to 3, **characterized in that** a programmable I/O unit (10) is provided in the diagnostic tool (1), which I/O (10) unit configures the driver block (11) and/or the load block (12) and/or the filter block (13) and/or the trigger block (41) according to the specifications of the communication interface.

5. Diagnostic tool according to any of claims 1 to 4, **characterized in that** a protection and monitoring function for protecting the signal line (15) against possible error conditions is implemented in the I/O unit (10) and/or in the driver block (11) and/or in the load block (12) and/or in the filter block (13) and/or in the trigger block (14).

## Revendications

1. Outil diagnostique comprenant un connecteur de diagnostic (2) pour la connexion sur une douille de diagnostic (8) d'un véhicule, l'outil diagnostique (1) réalisant une interface de communication, au moins un émetteur-récepteur universel (USTn) étant prévu dans l'outil diagnostique (1), lequel émetteur-récepteur universel est relié à une broche du connecteur de diagnostic (2) par l'intermédiaire d'une ligne de signal (15), l'émetteur-récepteur universel (USTn) comportant un bloc d'attaque (11) pouvant être configuré pour régler le niveau électrique haut et/ou bas de la ligne de signal (15) et un bloc de charge (12) pouvant être configuré pour régler une résistance électrique entre la ligne de signal (15) et une tension de référence et/ou entre la ligne de signal (15) et la masse, **caractérisé en ce qu'**un multiplexeur numérique (3) est prévu dans l'outil diagnostique (1), lequel multiplexeur numérique est relié à l'émetteur-récepteur universel (USTn) et à un bloc de commande de communication de données (5) et qui, en fonction de l'interface de communication, établit la liaison nécessaire entre la sortie et l'entrée numériques de l'émetteur-récepteur universel (USTn) et les sorties et les entrées du bloc de commande de communication de données (5).

2. Outil diagnostique selon la revendication 1, **caractérisé en ce qu'**un bloc de filtre (13) pouvant être configuré est prévu dans l'outil diagnostique (1) pour filtrer les composantes de signal d'une certaine gamme de fréquence du signal utile et/ou pour compléter dynamiquement la ligne de signal (13).

3. Outil diagnostique selon la revendication 1 ou 2, **caractérisé en ce qu'**un bloc de déclenchement (14) pouvant être configuré est prévu dans l'outil diagnostique (1) pour détecter le niveau électrique haut et/ou bas au niveau de la ligne de signal (15).

4. Outil diagnostique selon l'une des revendications 1 à 3, **caractérisé en ce qu'**une unité I/O (10) pouvant être programmée est prévue dans l'outil diagnostique (1), laquelle unité I/O configure le bloc d'attaque (11) et/ou le bloc de charge (12) et/ou le bloc de filtre (13) et/ou le bloc de déclenchement (41) selon les spécifications de l'interface de communication.

5. Outil diagnostique selon l'une des revendications 1 à 4, **caractérisé en ce qu'**une fonction de protection et de surveillance permettant de protéger la ligne de signal (15) contre d'éventuelles conditions de défaut est réalisée dans l'unité I/O (10) et/ou dans le bloc d'attaque (11) et/ou dans le bloc de charge (12) et/ou dans le bloc de filtre (13) et/ou dans le bloc de déclenchement (14).
